# NEUE EUROPÄISCHE PATENTSCHRIFT

(11) **EP 0 242 749 B2**
(45) Veröffentlichungstag und Bekanntmachung des Hinweises auf die Entscheidung über den Einspruch: **15.05.1996**
(45) Hinweis auf die Patenterteilung: 06.03.1991
(21) Anmeldenummer: 87105404.5
(22) Anmeldetag: 11.04.1987
(51) Int. Cl.: A01C 17/00

(54) **Schleuderstreuer**
Broadcaster
Distributeur à disques

(30) Priorität: 22.04.1986 DE 3613540
(43) Veröffentlichungstag der Anmeldung: 28.10.1987
(73) Patentinhaber: Amazonen-Werke H. Dreyer GmbH & Co. KG, D-49205 Hasbergen (DE)
(72) Erfinder: Dreyer, Heinz, Dipl.-Ing. Univ. Dr. agr., D-4507 Hasbergen (DE)
(74) Vertreter: Grünecker, Kinkeldey, Stockmair & Schwanhäusser Anwaltssozietät

(56) Entgegenhaltungen:
- EP-A- 0 017 128
- DE-A- 2 818 227
- DE-U- 1 757 834
- GB-A- 2 075 322
- Prospekt "Vicon Wurzelstockdüngung" B-75 OBST D'70
- Prospekt "Vicon Pendelstreuer" B-75 D71

## Beschreibung

Die Erfindung betrifft einen Schleuderstreuerzum Verteilen von Düngemitteln u. dgl. gemäß des Oberbegriffes des Anspruches 1.

Ein derartiger Schleuderstreuer ist bereits durch das deutsche Gebrauchsmuster 78 36 640 bekannt. Dieser als Anbauschleuderstreuer ausgebildete Schleuderstreuer weist zwei rotierend angetriebene Schleuderscheiben auf, deren Gleitfläche kugelförmig, d.h. nach außen allmählich ansteigend ausgebildet ist und sich unterhalb des durch ein dachförmiges Mittelteil im unteren Bereich geteilten Vorratsbehälters befinden. Die im Vorratsbehälter befindlichen Düngemittel werden den Schleuderscheiben über die in unterschiedlichen Größen einstellbaren, im unteren Bereich des Vorratsbehälters angeordneten Auslauföffnungen zugeführt, wobei die Düngemittelpartikel durch die auf den Schleuderscheiben angeordneten Wurfelemente jeweils in einem bestimmten Abwurfbereich abgeschleudert werden, und gleichmäßig auf der Bodenoberfläche verteilt werden.
Dieser Abwurfbereich, d.h., die effektive Streubreite dieses Schleuderstreuers ist veränderbar, indem die Wurfelemente radial auf den Schleuderscheiben verschoben werden, so daß es zu einer Veränderung des Abwurfwinkels kommt und sich gleichzeitig der Abstand der Abwurfkanten von der Drehachse der Schleuderscheibe verändert.

Hierdurch ist es möglich, die vorgegebenen Arbeitsbreiten durch eine entsprechende Einstellung der Wurfelemente in einfacher Weise anzupassen.

Durch dasselbe Gebrauchsmuster sind weiterhin Schleuderscheiben mit waagerecht verlaufenden Gleitflächen und flügelartigen Wurfelementen bekannt. Diese Wurfelemente weisen einen in gleicher Weise wie bei dem vorstehend beschriebenen Ausführungsbeispiel radial verschiebbar auf jeder Schleuderscheibe angebrachten inneren Teil und daran in aufrechter Ebene schwenkbar angeordneten äußeren Teil auf. Hierdurch ist es möglich, die Anstellwinkel der Wurfelemente an ihrer Abwurfkante und den Abstand der Abwurfkante von der Drehachse der Schleuderscheiben unabhängig voneinander zu verändern, so daß ein Anpassen an vorgegebene Arbeitsbreiten auch hier durch eine entsprechende Einstellung der Wurfelemente in einfacher Weise möglich ist.

Hinsichtlich der Streuqualität des Streubildes hat sich das Verschieben der hier ein-oder zweistückig ausgebildete Wurfelemente als nachteilig erwiesen, da die Wurfelemente bzw. das jeweilige innere Teil der Wurfelemente eine bestimmte gleichbleibende Länge aufweisen, so daß sich beim nach außen Versetzen der Wurfelemente nicht nur der Abstand der Abwurfkanten, sondern auch der Abstand der inneren Bauteile der Wurfelemente von der Drehachse der Schleuderscheiben verändert. Dies hat zur Folge, daß die aus den Auslauföffnungen des Vorratsbehälters auf die Schleuderscheiben herausrieselnden Düngenmittel nicht ordnungsgemäß von den Wurfelementen erfaßt und abgeschleudert werden, was zu einer negativen Beeinflussung des Streubildes führt.

Durch das deutsche Gebrauchsmuster 66 01 493 ist ein weiterer Schleuderstreuer mit rotierend angetriebenen und mit verschiebbaren Wurfelementen bestückten Schleuderscheiben bekannt. Mit Hilfe dieser in radialer Richtung verschieb- oder verstellbar auf den Schleuderscheiben angeordneten Wurfelemente läßt sich die effektive Streubreite des Schleuderstreuers verändern. Zur Verfeinerung der Abstimmung der Arbeitsbreite sind nicht nur in den Wurfelementen zusätzliche Löcher angeordnet, sondern auch die Schleuderscheiben besitzen in Richtung der Wurfelemente zur Scheibenmitte zusätzliche Bohrungen, so daß sich der Abstand der Wurfkanten der Wurfelemente von der Drehachse der jeweiligen Schleuderscheibe in kleinen Stufen verändern läßt. Ein Vergrößern der Streubreite erfordert durch das nach außen Versetzen des gesamten Wurfelementes, wodurch sich auch der Abstand der inneren Bauteile der jeweiligen Wurfelemente nachteilig nach außen verfagert. Hierdurch werden die aus den Auslauföffnungen des Vorratsbehälters herausrieselnden Düngemittel nicht in gewünschter Weise von den Wurfelementen der Schleuderscheiben erfaßt und abgeschleudert, so daß das Erzeugen eines gleichmäßigen Streubildes über die gesamte Streubreite nicht gewährleistet ist.

Des weiteren ist durch das deutsche Gebrauchsmuster 17 57 834 ein Einscheibenstreuer mit einem horizontal umlaufenden Streuteller bekannt. Der Streuteller ist mit in radialer Richtung verschiebbar angeordneten Wurfschaufeln bestückt, so daß die Streubreite durch radiale Verschiebung der Wurfschaufeln geändert werden kann. Durch das Verschieben derkompletten Wurfschaufeln kommt es bei einer Arbeitsbreitenvergrößerung zur Verlagerung der gesamten Wurfschaufel nach außen, so daß die aus der Auslauföffnung herausriesenden Düngemittel nicht sachgemäß von den Wurfelementen erfaßt und abgeschleudert werden, was zu einer negativen Beeinflußung der Streustärkengleichmäßigkeit über die Streubreite führt.

Weiterhin sind durch dieses Gebrauchsmuster fest auf dem Streuteller angeordnete Wurfschaufeln bekannt, die mit Verlängerungsblechen versehen sind. Diese Wurfschaufeln bestehen hierbei aus einem inneren und einem äußeren Teil, wobei die äußeren Teile als Verlängerungsbleche ausgebildet sind, so daß die Länge der einzelnen Wurfschaufeln regelbar ist. Die Verlängerungsbleche sind bezüglich einer gewünschten Streubreite mit Hilfe einer Schraube einstellbar, wodurch die Arbeitsbreite den jeweiligen Erfordernissen in besonders vorteilhafter Weise angepaßt werden kann. Die Ausbildung und Anordnung dieser Wurfschaufeln auf der Streuscheibe mit ihrem festen inneren und beweglichem äußeren Teil erlaubt aber nur eine Düngungsart, die Normaldüngung. Es ist also nicht möglich, diesen Einscheibenstreuer für mehrere Düngungsarten zu verwenden.

Der Erfindung liegt daher die Aufgabe zugrunde, den bekannten Schleuderstreuer in einfacher Weise universeller auf die verschiedenen Einsatzzwecke einstellen zu können.

Diese Aufgabe wird erfindungsgemäß durch den kennzeichnenden Teil des Anspruches 1 gelöst. Infolge dieser Maßnahmen wird ein Schleuderstreuer geschaffen, bei dem sich in besonders einfacher Weise mit nur wenigen Handgriffen unterschiedliche Arbeitsbreiten einstellen lassen. Weiterhin lassen sich die auf den Schleuderscheiben angeordneten Wurfelemente des Schleudersteuers sehr einfach und schnell von einer Düngungsart auf eine andere Düngungsart einstellen oder umrüsten, oder die Arbeitsbreite bei unterschiedlichen Düngungsarten verändern. Hierdurch läßt sich in besonders vorteilhafter Weise eine Anpassung der Streubreite an die jeweiligen Einsatzverhältnisse vornehmen.

Dadurch, daß das jeweilige, aus einem inneren und einem äußeren Teil bestehende Wurfelement als teleskopartig ausziehbares und einschiebbares Wurfelement ausgebildet ist, wobei das äußere Teil gegenüber dem inneren Teil teleskopartig ausziehbar und einschiebbar ist, ist es möglich, den Abstand der Abwurfkanten der Wurfelemente von der Drehachse der Schleuderscheibe zu verändern, ohne daß es zu einer Veränderung des Abstandes der inneren Bauteile der Wurfelemente gegenüber der Drehachse der Schleuderscheibe kommt. Eine Veränderung des Abstandes der Abwurfkante der Wurfelemente von der Drehachse der Schleuderscheibe führt hierbei nicht zu einer Verschiebung des inneren Bauteiles gegenüber der Drehachse der Schleuderscheibe, so daß die aus den Auslauföffnungen des Vorratsbehälters auf die Schleuderscheibe herausrieselnden Düngemittelpartikel ordnungsgemäß von den Wurfelementen erfaßt und abgeschleudert werden, so daß die Streuqualität der einzelnen Schleuderscheiben bei Veränderung der effektiven Streubreite nicht negativ beeinflußt wird. Auch können die für die verschiedenen Düngungsarten ausgebildeten äußeren Teile des Wurfelementes vorteilhaft ausgetauscht werden. Selbst beim Einsatz der verschiedenartig ausgebildeten äußeren Teile für die verschiedenen Düngungsarten ist es möglich, durch verändern der Länge der jeweiligen Wurfelemente die Arbeitsbreite zu verändern.

In einerweiteren Ausführungsform ist erfindungsgemäß vorgesehen, daß die Schleuderscheiben abnehmbar, auch bei gefülltem Vorratsbehälter, auf ihrer jeweiligen Abtriebwelle angeordnet und gegen anders ausgebildete Schleuderscheiben austauschbar sind. Hierdurch ist es auf einfachste Weise möglich, den Austausch der Schleuderscheiben vorzunehmen.

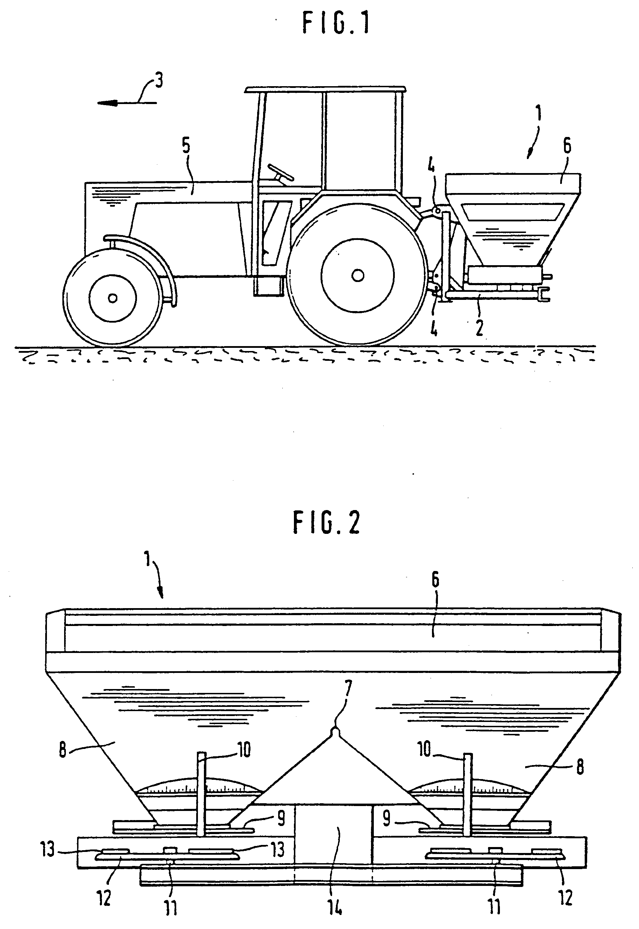

Weitere Einzelheiten der Erfindung sind der Beispielsbesch den Zeichnungen zu entnehmen. Hierbei zeigen
Fig. 1 den erfindungsgemäß ausgerüsteten und an einen Schlepper angebauten Schleuderstreuer in der Seitenansicht,
Fig. 2 den erfindungsgemäß ausgebildeten Schleuderstreuer in der Ansicht von hinten,
Fig. 3 die von einem Schleuderstreuer abgenommene Schleuderscheibe in der Seitenansicht,
Fig. 4 die Schleuderscheibe gemäß Fig. 3 in der Draufsicht,
Fig. 5 eine Teilansicht des erfindungsgemäßen, längenverstellbaren Wurfelementes für die Normaldüngung,
Fig. 6 die Teilansicht des erfindungsgemäßen, längenverstellbaren Wurfelementes für das Spätdüngen,
Fig. 7 das erfindungsgemäße, längenverstellbare Wurfelement für das Grenzstreuen bei der Normaldüngung,
Fig. 8 das erfindungungsgemäße, längenverstellbare Wurfelement für das Grenzstreuen bei der Spätdüngung.

Der als Anbauschleuderstreuer ausgebildete Schleuderstreuer 1 weist den Rahmen 2 auf, der auf seiner in Fahrtrichtung 3 gesehenen vorderen Seite mit den Dreipunktkupplungselementen 4 zum Anbau an den Schlepper 5 ausgestattet ist Weiterhin ist an dem Rahmen 2 der Vorratsbehälter 6 befestigt, der zwei durch das dachförmige Mittelteil 7 getrennte trichterförmige Behälterteile 8 aufweist. Im unteren Bereich der trichterförmigen Behälterteile 8 ist jeweils eine lösbare Bodenplatte 9 angeordnet. Diese Bodenplatte 9 weist die mit den Schiebern 10 in verschiedenen Öffnungsweiten einstellbaren Auslauföffnungen auf. Unterhalb der in der Bodenplatte 9 angeordneten Auslauföffnungen ist jeweils eine um die aufrechte Achse 11 antreibbare Schleuderscheibe 12 angeordnet. Die Schleuderscheiben 12 sind jeweils mit den Wurfelementen 13 bestückt und werden über das Getriebe 14 von der Zapfwelle des den Anbauschleuderstreuer tragenden Schleppers 5 in einander entgegengesetztem Drehsinn angetrieben. Die aus dem von den Schiebern 10 freigegebenen Öffnungsquerschnitt der Auslauföffnungen herausrieselnden Düngemittel gelangen auf die Schleuderscheiben 12 und werden von den jeweiligen Wurfelementen 13 erfaßt und über einen bestimmten Streubereich abgeschleudert, wobei sich ein Streubild gleichmäßiger Streustärke ergibt; d.h. nach dem die einander überlappten nebenliegenden Streubahnen zusammengesetzt werden.

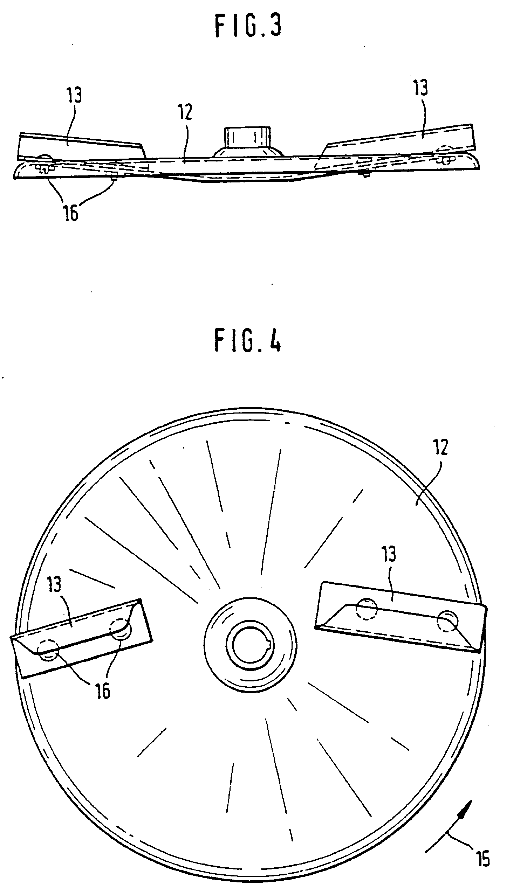

Die Fig. 3 und 4 zeigen die Anordnung der Wurfelemente 13 auf der Schleuderscheibe 12. Diese Schleuderscheibe 12 wird derart rotierend angetrieben, daß sie sich in Richtung des Pfeiles 15 dreht. Bei der hier abgebildeten Schleuderscheibe 12 handelt es sich um die unterhalb des rechten Behälterteiles 8 angeordnete Schleuderscheibe. Die Wurfelemente 13 sind mit Hilfe der Schrauben 16 auf der Schleuderscheibe 12 befestigt. Die Schleuderscheiben 12 sind derart ausgebildet, daß sie sich auch bei gefülltem Vorratsbehälter 6 von ihrer jeweiligen Antriebswelle 11 abnehmen lassen, so daß diese Schleuderscheiben 12 gegen anders ausgebildete Schleuderscheiben austauschbar sind.

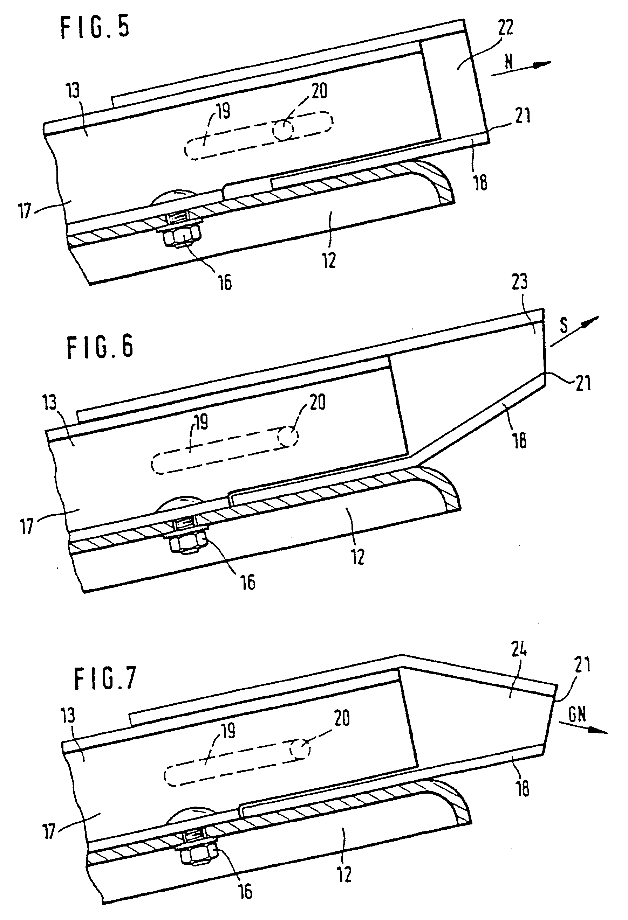

Die Fig. 5 bis 8 zeigen Wurfelemente 13, die aus einem mit Schrauben 16 auf der Schleuderscheibe 12 festgeschraubten innerem Teil 17 und dem äußeren Teil 18 bestehen. Das jeweilige äußere Teil 18 weist jeweils eine Langlochführung 19 auf, die mit dem an dem innern Teil 17 angeschweißten Bolzen 20 zusammenwirkt. Das jeweilige, aus einem inneren und einem äußeren Teil 17, 18 bestehende Wurfelement 13 ist als teleskopartig ausziehbares und einschiebbares Wurfelement 13 ausgebildet Hierdurch ist es möglich, den Abstand der jeweiligen Abwurfkante 21 des Wurfelementes 13 in bezug auf die Drehachse 11 des Schleuderscheibe 12 zu verändern. Dieses geschieht mit Hilfe des telekopartigen ausziehbar und einschiebbaren äußeren Teiles 18, das in bezug auf das innere Teil 17 in verschiedenen Positionen arretierbar ist Hierdurch ergibt sich ein längenverstellbares und in verschiedenen Positionen arretierbares Wurfelement 13, wodurch dem Landwirt die Möglichkeit gegeben wird, sich den jeweiligen erforderlichen Einsatzbedingungen in einfacher Weise anzupassen. Mit Hilfe der längenverstellbaren, teleskopartig ausziehbaren und einschiebbaren Wurfelemente 13 ist es somit möglich, die Streubreite des Schleuderstreuers 1 an die jeweiligen, unterschiedlichen Einsatzverhältnisse optimal anzupassen.

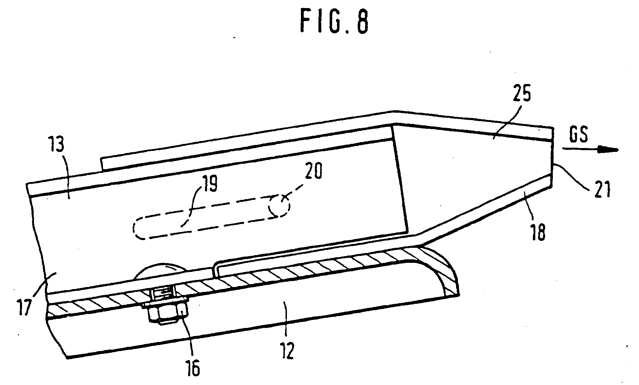

Die Art der Anordnung des verschiebbaren äußeren Teiles 18 in leicht lösbarer Weise an dem festen inneren Teil 17 des Wurfelementes 13 ermöglicht den Einsatz verschiedenartig ausgebildeter äußerer Teile 22, 23, 24 und 25. Hierbei ist das äußere Teil 22 derart ausgebildet, daß sich das mit diesem äußeren Teil 22 ausgerüstete Wurfelement 13 für das Normaldüngen eignet Bei dem äußeren Teil 23 gemäß der Fig. 6 handelt es sich um ein Wurfelement 13, mit dem sich die Spätdüngung bei Getreide durchführen läßt. Das mit dem äußeren Teil 24 bestückte Wurfelement 13 gemäß der Fig. 7 wird für das Grenzstreuen bei der Normaldüngung eingesetzt. Bei dem äußeren Teil 25 gemäß Fig. 8 handelt es sich um ein Wurfelement 13, das für das Grenzstreuen bei der Spätdüngung eingesetzt wird. Diese für die speziellen Düngungsarten ausgebildeten äußeren Teile 22, 23, 24 und 25 lassen sich in einfacher Weise an dem inneren Teil 17 des Wurfelementes 13 anbringen, so daß sich ein teleskopartig ausziehbares und einschiebbares Wurfelement 13 ergibt. Mit Hilfe dieser äußeren Teile 18, die in bezug auf das innere Teil 17 teleskopartig ausziehbar und einschiebbar und für unterschiedliche Düngungsarten ausgebildet sind, ist es durch die Veränderung der Länge des Wurfelementes 13 auf einfache weise möglich, unterschiedliche Arbeitsbreiten des Schleuderstreuers einzustellen.

Weiterhin ist es möglich, die Abwurfkanten 21 der einzelnen auf den Schleuderscheiben 12 angeordneten Wurfelemente derart in bezug auf die aufrechte Achse 11 einzustellen, so daß sich unterschiedliche Längen für die einzelnen Wurfelemente 13 ergeben. Hierdurch ist es möglich, die Düngemittelpartikel mit unterschiedlichen Abwurfgeschwindigkeiten von der jeweiligen Schleuderscheibe 12 abzuschleudern, so daß die unterschiedlichen Düngemittelpartikel unterschiedlich weit fliegen. Infolge dieser Maßnahmen läßt sich der Düngerstreuer exakt auf die jeweils auszubringende Düngemittelsorte einstellen, so daß sich ein Streubild gleichmäßiger Streustärke über die gesamte, aus den nebeneinander angeordneten, sich überlappenden, einzelnen Streusektoren der jeweiligen Schleuderscheiben 12 zusammengesetzten Streubreite des Schleuderstreueres ergibt.

## Patentansprüche

1. Schleuderstreuer zum Verteilen von Düngemitteln u.dgl. auf landwirtschaftlichen Flächen mit einem Vorratsbehälter und zumindest zwei unterhalb des Vorratsbehälters angeordneten rotierend angetriebenen Schleuderscheiben, auf denen zumindest ein aus zwei Teilen bestehendes Wurfelement angeordnet ist, wobei zumindest das äußere Teil des Wurfelementes in unterschiedliche Stellungen, und zwar insbesondere für unterschiedliche Arbeitsbreiten und unterschiedliche Düngungsarten, wie Normalstreuen, Grenzstreuen und Spätdüngen, versetzbar ist, dadurch gekennzeichnet, daß das äußere Teil (18, 27) des jeweiligen Wurfelementes (13, 26) gegenüber dem inneren Teil (17, 28) des jeweiligen Wurfelementes (13, 26) längenverstellbar und in verschiedenen Positionen arretierbar ist, daß das jeweilige, aus einem inneren und einem äußeren Teil (17, 18, 27, 28) bestehende Wurfelement (13, 26) als teleskopartig ausziehbares und einschiebbares Wurfelement (17, 18, 27, 28) ausgebildet ist, daß das äußere Teil (18, 27) von dem inneren Teil (17, 28) des Wurfelementes (13, 26) abnehmbar angeordnet ist, daß verschiedenartig ausgebildete äußere Teile (18, 22, 23, 24, 25, 27) des Wurfelementes (13, 26) vorgesehen sind und an dem jeweiligen inneren Teil (17, 28) des Wurfelementes (13, 26) anbringbar sind, und daß das äußere Teil (18, 27) eine untere Leitfläche aufweist, die den Düngemittelstrom ablenkt und mit dem äußeren Teil gemeinsam verschiebbar ist

2. Schleuderstreuer nach Anspruch 1, dadurch gekennzeichnet, daß die Schleuderscheiben (12) abnehmbar, auch bei gefülltem Vorratsbehälter (6), auf ihrer jeweiligen Antriebswelle (11) angeordnet sind.

3. Schleuderstreuer nach Anspruch 2, dadurch gekennzeichnet, daß die Schleuderscheiben (12) gegen anders ausgebildete Schleuderscheiben austauschbar sind.

## Claims

1. Centrifugal distributor for distributing fertilizers and the like overagricultural areas, including a hopper and at least two rotatably driven centrifugal discs, which are disposed beneath the hopper and on which at least one throwing element is disposed, said throwing element comprising two portions, wherein at least the outer portion of the throwing element is displace able into different positions, such being especially for different working widths and different fertilizing methods, such as normal distribution, limited distribution and late fertilizing, characterised in that the outer portion (18, 27) of each respective throwing element (13,26) is longitudinally adjustable relative to the inner portion (17, 28) of each respective throwing element (13, 26) and is securable in various positions; each respective throwing element (13, 26) comprises an inner and an outer portion (17, 18, 27, 28) and is a telescopically extensible and retractable throwing element (17, 18, 27, 28); the outer portion (18, 27) is disposed so as to be detachable from the inner portion (17, 28) of the throwing element (13, 26); variously constructed outer portions (18, 22, 23, 24, 25, 27) of the throwing element (13, 26) are provided and are mountable on the respective inner portion (17, 28) of the throwing element (13, 26); and the outer portion (18, 27) has a lower guide face which deflects the flow of fertilizer and is displaceable together with the outer portion.

2. Centrifugal distributor according to claim 1, characterised in that the centrifugal discs (12) are disposed on their respective drive shaft (11) so as to be detachable, even when the hopper (6) is full.

3. Centrifugal distributor according to claim 2, characterised in that the centrifugal discs (12) are exchangeable for differently formed centrifugal discs.

## Revendications

1. Epandeur centrifuge pour distribuer des engrais ou produits analogues sur des surfaces à usage agricole, épandeur comportant un réservoir d'alimentation sous lequel se trouvent au moins deux disques centrifuges entraînés en rotation, ces disques étant équipés d'un élément d'épandage formé d'au moins deux parties, et au moins la partie extérieure de l'élément d'épandage peut se placer dans différentes positions et cela notamment pour différentes largeurs de travail et différents types d'engrais tels que l'épandage normal, l'épandage limitrophe et l'épandage tardif, épandeur caractérisé en ce que la partie extérieure (18, 27) de l'élément d'épandage (13, 26) respectif se règle longitudinalement et se bloque dans différentes positions par rapport à la partie intérieure (17, 28) de l'élément d'épandage (13, 26) respectif, et l'élément d'épandage (13, 26) qui se compose d'une partie intérieure et d'une partie extérieure (17, 18, 27, 28) est un élément d'épandage (17, 18, 27, 28) extensible et rétractable télescopiquement, la partie extérieure (18, 27) étant montée de manière amovible sur la partie intérieure (17, 28) de l'élément d'épandage (13, 26), et des parties extérieures (18, 22, 23, 24, 25, 27) de formes différentes étant prévus pour l'élément d'épandage (13, 26) et peut être montée sur la partie intérieure respective (17, 28) de l'élément d'épandage (13, 26), la partie extérieure (18, 27) ayant une surface inférieure de guidage qui dévie le flux d'engrais et peut coulisser en commun avec la partie extérieure.

2. Epandeur d'engrais selon la revendication 1, caractérisé en ce que les disques d'épandage sont montés de manière amovible sur leur axe d'entraînement respectif, cette amovibilité existant même lorsque le réservoir d'alimentation est plein.

3. Epandeur centrifuge selon la revendication 2, caractérisé en ce que les disques d'épandage (12) peuvent être remplacés par des disques d'épandage de formes différentes.
